Europäisches Patentamt

European Patent Office

Office européen des brevets

(19)

(11) Veröffentlichungsnummer: **0 243 340**
**B1**

(12) # EUROPÄISCHE PATENTSCHRIFT

(45) Veröffentlichungstag der Patentschrift:
**13.12.89**

(51) Int. Cl.⁴: **C21D 1/34,** C21D 1/42,
C21D 9/00

(21) Anmeldenummer: **87890057.0**

(22) Anmeldetag: **23.03.87**

(54) **Vorrichtung zum Ausgleich der Schienenschatten an erhitzen Brammen.**

(30) Priorität: **16.04.86 AT 998/86**

(43) Veröffentlichungstag der Anmeldung:
**28.10.87 Patentblatt 87/44**

(45) Bekanntmachung des Hinweises auf die Patenterteilung:
**13.12.89 Patentblatt 89/50**

(84) Benannte Vertragsstaaten:
**BE CH DE ES FR GB GR IT LI LU NL SE**

(56) Entgegenhaltungen:
**EP-A- 0 172 533**
**DE-B- 1 947 275**
**DE-C- 886 942**
**FR-A- 2 417 737**
**US-A- 2 452 197**

(73) Patentinhaber: **VOEST-ALPINE**
**INDUSTRIEANLAGENBAU GESELLSCHAFT M.B.H.,**
**Turmstrasse 44, A-4020 Linz(AT)**

(72) Erfinder: **Moshammer, Karl, Lokalbahnweg 8,**
**A-4060 Leonding(AT)**
Erfinder: **Langer, Uwe, Dr., Burgerstrasse 46,**
**A-4060 Leonding(AT)**
Erfinder: **Arif, Serwan, Kopernikusstrasse 22,**
**A-4020 Linz(AT)**

(74) Vertreter: **Matschnig, Franz, Dipl.-Ing.,**
**Siebensterngasse 54 Postfach 452, A-1071 Wien(AT)**

## Beschreibung

Die Erfindung bezieht sich auf eine Vorrichtung nach dem Oberbegriff des Anspruches 1.

In Warmband- und Blechwalzwerken werden die auszuwalzenden Brammen in sogenannten Stoßöfen auf ca. 1200°C erwärmt. Dabei werden die Brammen quer zur Walzrichtung auf wassergekühlten Stoßbahnschienen durch den Ofen geschoben oder mittels Schreitbalken durch den Ofen gefördert. An der Auflagefläche der Brammen entstehen durch die gekühlten Schienen Streifen geringerer Temperatur. Diese Streifen, die entsprechend dem Abstand der Stoßschienen in Abständen von z.B. 1 bis 2 m quer zur Walzrichtung verlaufen, weisen Temperaturen auf, die 50°C und mehr unterhalb der Temperatur der übrigen Brammenoberfläche liegen. Sie erscheinen dem Auge dementsprechend dunkler und werden daher Schienenschatten genannt. Diese lokalen Temperaturabsenkungen führen beim anschließenden Walzen der Brammen zu höchst unerwünschten Unregelmäßigkeiten in Banddicke und -breite.

Es ist eine Vorrichtung der eingangs genannten Art bekannt geworden (EP-A 0 172 533), mit deren Hilfe die Schienenschatten ausgeglichen werden sollen. Hiebei wird jede auszuwalzende Bramme vor dem Walzen in einer Stellung angehalten, in der je- der Schienenschatten oberhalb einer Induktions- spule zu liegen kommt, die in bekannter Weise durch Wirbelstromaufheizung die abgekühlten Streifen wieder erwärmt. Die um ein Blechpaket gewickelte Spule weist rechteckige Querschnittsform auf. Sie liegt vollständig unterhalb der von Walzen abgestützten Bramme, wobei die Spulenwindungen quer zur Längsrichtung, d.h. zur Fortbewegungsrichtung der Bramme liegen. Eine ähnliche Anlage ist der FR-A 2 417 737 zu entnehmen, wobei die auf Jochen sitzenden Spulen unterhalb oder seitlich der Brammen liegen.

Diese bekannte Art der Spulenanordnung führt zu einem schlechten Wirkungsgrad, da nur ein geringer Teil des Spulenfeldes – nämlich ein Teil des äußeren Streufeldes – zur Wirbelstromerwärmung herangezogen werden kann. Aus diesem Grund wird nicht nur der zusätzliche Energieverbrauch hoch, sondern es besteht auch die Gefahr, daß während des durch die Aufheizzeit bedingten Stillstandes der Bramme neue Schatten, diesmal von den Stützrollen, entstehen. Die Verwendung von Leitjochen nach der FR-A 2 417 737 bringt hingegen erhebliche Probleme hinsichtlich der baulichen Ausgestaltung und der Kühlung.

Es sei an dieser Stelle angemerkt, daß es z.B. aus der DE-B 1 947 275 bekannt geworden ist, zum Induktionshärten länglicher Werkstücke um diese eine Spule zu legen, deren Durchmesser und Windungsabstände in Längsrichtung des Werkstückes nach beiden Seiten hin abnehmen, um Temperatursprünge und hiedurch bruchgefährdete Zonen zu vermeiden. Aufgabenstellung und Lösung sind jedoch andere als bei der vorliegenden Erfindung.

Eine aus der DE-C 886 942 bekannt gewordene Vorrichtung zum induktiven Erhitzen von Platten oder Blechen zeigt eine wassergekühlte Spule mit einer einzigen Windung, die an der zu erhitzenden und zu härtenden Oberseite des Werkstückes zu diesem benachbart liegt, sich an der Unterseite jedoch in größerem Abstand von dem Werkstück befindet und dort auch breiter ausgebildet ist. In Hinblick auf die andere Ausgestaltung und Aufgabenstellung (starkes Erhitzen eines kontinuierlichen Blechbandes an seiner Oberfläche) kann dieses Dokument die Erfindung dem Fachmann gleichfalls nicht nahelegen.

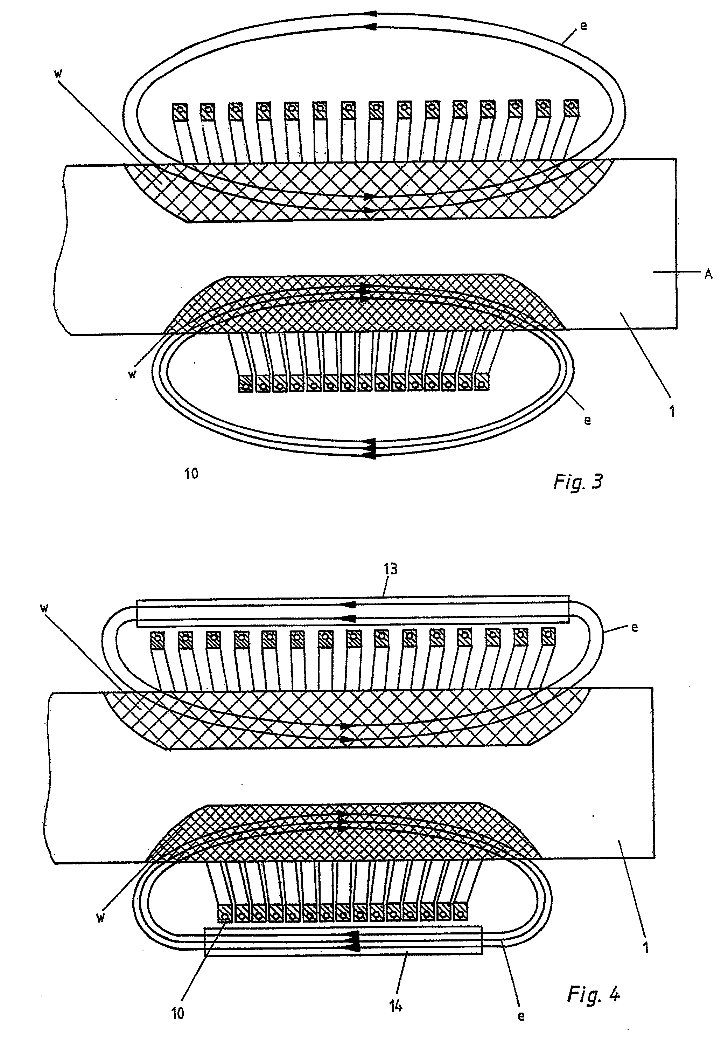

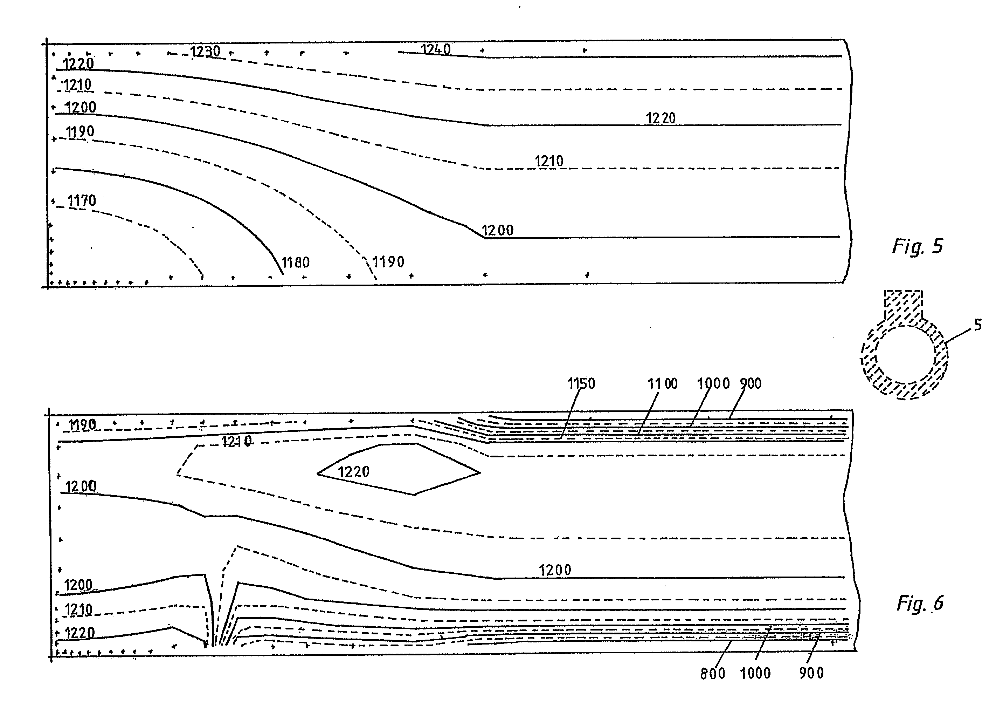

Dies gilt auch für die US-PS 2 452 197, deren Ziel die Erzeugung einer vorgebbaren Wärmeverteilung auf einem Werkstück durch induktive Erhitzung ist. Zu diesem Zweck werden Shunt-Kondensatoren an einzelne Spulenbereiche geschaltet. Auch sind in den Fig. 3 und 4, welche den Stand der Technik zu dieser Patentschrift erläutern, Spulengeometrien gezeigt, die auf Grund verschiedenen Abstandes der Spule von dem Werkstück bzw. verschiedener Abstände der Windungen einer Spule voneinander eine unterschiedliche Erwärmung in dem Werkstück hervorrufen.

Ziel der Erfindung ist die Schaffung einer Vorrichtung zum Ausgleich der Schienenschatten, die bei geringem Energieverbrauch kurze Aufheizzeiten aufweist.

Dieses Ziel läßt sich mit einer vorrichtunggegebenen Art erreichen, die erfindungsgemäß nach dem Kennzeichen des Anspruches 1 ausgebildet ist.

Dank der erfindungsgemäßen Ausbildung ergibt sich eine gute Ausnutzung der zugeführten elektrischen Energie, da das innere Spulenfeld und nicht das Streufeld die Erwärmung verursacht. An der Unterseite der Bramme werden im Bereich der Schienenschatten Wirbelströme hoher Dichte induziert, so daß hier eine starke und rasche Aufheizung erfolgt. An der Oberseite der Bramme erfolgt wegen der weiter auseinanderliegenden Windungen und der daher geringeren Felddichte nur eine geringe Erwärmung, die keineswegs stört, sondern wegen der tief in die Bramme reichenden lokalen Temperaturabsenkung durch die gekühlten Schienen des Stoßofens zu einem weiteren Ausgleich der Schienenschatten beiträgt.

Weitere Merkmale der Erfindung sind in den Unteransprüchen gekennzeichnet.

Die Erfindung samt anderen Vorteilen ist im folgenden an Hand beispielsweiser Ausführungsformen näher erläutert, die in der Zeichnung veranschaulicht sind. In dieser zeigen Fig. 1 in schematischer Draufsicht die Lage einer erfindungsgemäßen Vorrichtung zwischen einer Stoßofenanlage und einer Walzstraße, Fig. 2 in vereinfachter schaubildlicher Darstellung die Anordnung zweier Induktionsspulen bei einer Vorrichtung nach der Erfindung, Fig. 3 und 4 je in einem schematischen, vertikalen Schnitt in Längsrichtung einer Bramme zwei Varianten der Vorrichtung nach der Erfindung, mit eingezeichneter Feldverteilung der Induktionsspule und der in der Bramme auftretenden Wirbelstromzonen und die Fig. 5 bzw. 6 gleichfalls in vertikalen Längsschnitten das Temperaturprofil einer Bramme nach dem Verlassen eines Stoßofens vor Eintritt in die erfindungsgemäße Vorrichtung bzw. nach der Erwärmung mittels der erfindungsgemäßen Vorrichtung.

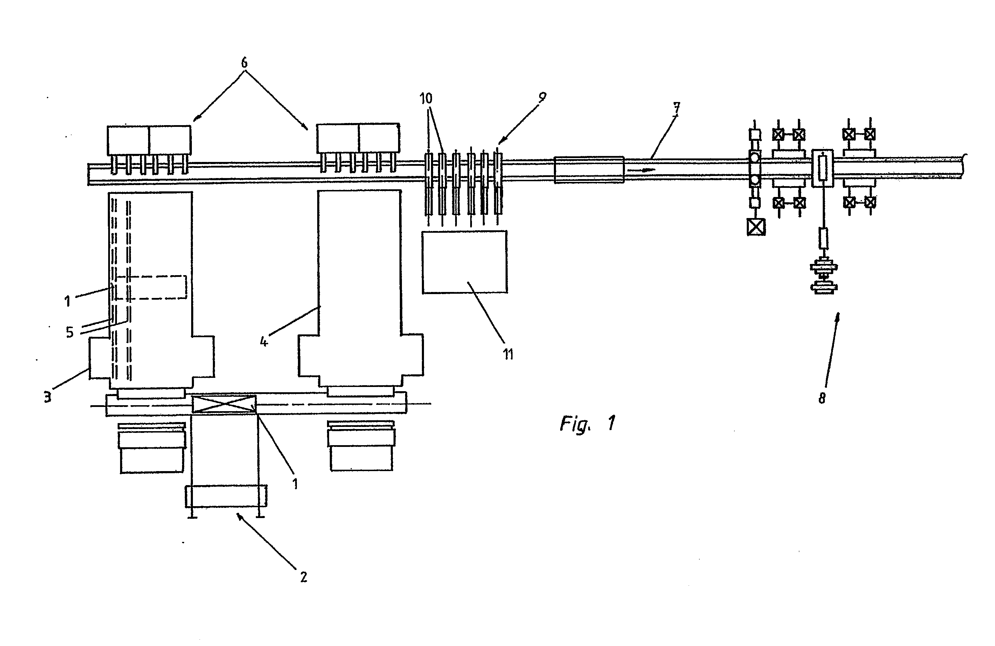

Gemäß Fig. 1 werden die zu erwärmenden Brammen 1 mittels einer Aufgabeeinrichtung 2 in einen Stoßofen 3 bzw. 4 eingebracht und in diesem auf etwa 1200° erwärmt. Die Brammen 1 werden bei ihrem Weg durch den Ofen auf wassergekühlten Schienen 5 abgestützt. Im vorliegenden Fall sind sechs Schienen 5 vorgesehen, die für den linken Stoßofen 3 strichliert eingezeichnet sind. Mit Hilfe einer Entnahmeeinrichtung 6 gelangen die Brammen 1 auf einen Rollgang 7, der zu der Walzstraße 8 führt, deren Vorstraße schematisch gezeigt ist. Zwischen den Stoßöfen 6 und der Walzstraße 8 ist die erfindungsgemäße Vorrichtung 9 mit Spulen 10 vorgesehen, die nachstehend näher beschrieben wird. Der Vorrichtung 9 ist eine Einrichtung 11 zur Strom- und Kühlwasserversorgung zugeordnet.

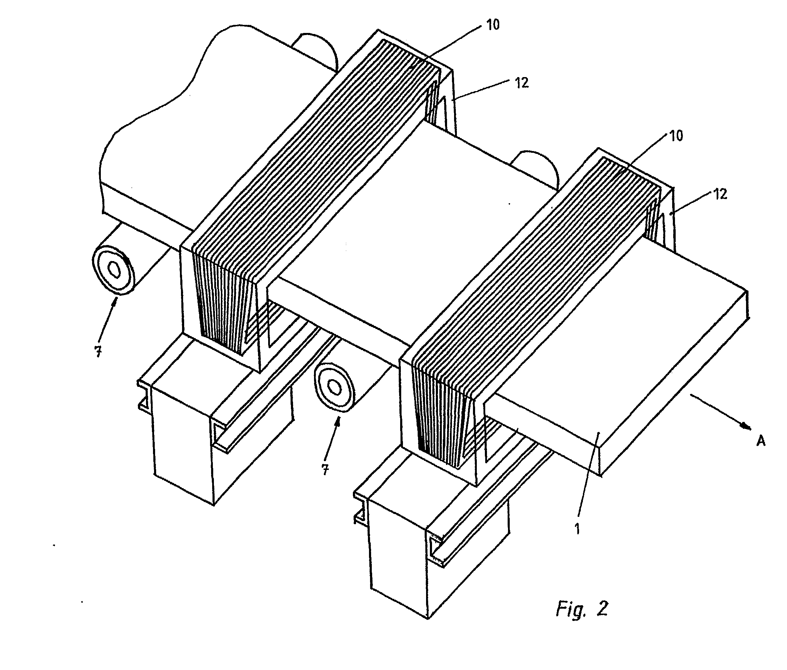

In Fig. 2 ist eine in Richtung A auf dem Rollgang 7 bewegbare Bramme 1 gezeigt, die von zwei Induktionsspulen 10 umfaßt wird. Die aus Kupferprofilrohren bestehende Wicklung jeder Spule 10 ist in einem mechanisch stabilen Rahmen 12 gehaltert. Sie ist einerseits an eine schaltbare Wechselspannungsquelle, andererseits an eine Kühlwasserversorgung angeschlossen. Wie in Fig 1 angedeutet, sind insgesamt sechs derartige Spulen 10 längs des Rollganges 7 vorgesehen. Der Abstand der Spulen 10 entspricht dabei dem Abstand der zufolge der Stoßofenschienen 5 auf der Unterseite der Brammen entstandenen Schienenschatten.

Wenn die Brammen 1 nach Verlassen des Stoßofens 3 bzw. 4 auf dem Rollgang 7 in Richtung des Walzwerkes 8 bewegt werden, werden sie an der Vorrichtung 9 so angehalten, daß jeder Schienenschatten im Bereich einer Induktionsspule 10 liegt. Nach kurzem Anschalten der Spulen 10 an die Wechselspannungsquelle und entsprechender lokaler Erwärmung der Bramme 1 im Bereich der Schienenschatten wird die Bramme 1 weiter in Richtung des Walzwerkes transportiert und die nächste Bramme gelangt zur Behandlung in die Vorrichtung 9.

Der Fig. 3 ist die erfindungsgemäße Ausbildung und Anordnung einer Induktionsspule 10 in einem Längsschnitt zu entnehmen. Es ist deutlich zu erkennen, daß der Windungsabstand an der Oberseite der Bramme 1 etwa doppelt so groß ist als an der Unterseite und daß die Spule 10 in Seitenansicht trapezförmig ist. Die Dichte der Feldlinien e an der Brammenoberseite ist dementsprechend geringer, so daß sich dort auch eine geringere Dichte der induzierten Wirbelströme w ergibt, als an der Brammenunterseite. Dies ist durch entsprechende Schraffuren in der Zeichnung angedeutet.

Die Windungen jeder Spule 10 verlaufen im wesentlichen senkrecht zur Längsrichtung der Brammen, wobei an den beiden Seiten der Spule wegen der erfindungsgemäßen Wicklungsart Windungen positive bzw. negative Abweichungen bezüglich der Vertikalen aufweisen. Der Begriff "Längsrichtung" ist im Sinne der Fortbewegungsrichtung der Brammen oder Werkstücke zu verstehen.

Die Querschnittsform der Spulen 10 ist – entsprechend dem Querschnitt der Brammen 1 – recketeckförmig. Beispielsweise sei bei einer Breite der Bramme von 1200 mm und einer Dicke der Bramme von 210 mm angegeben, daß der lichte Querschnitt jeder Spule 1350 x 280 mm beträgt. In Seitenansicht beträgt die Breite jeder Spule unten (untere lange Trapezseite) 300 mm, wogegen die obere Spulenbreite (obere lange Trapezseite) 600 mm beträgt.

Wenn in dieser Beschreibung und in den Patentansprüchen von der "Unterseite" der Brammen gesprochen wird, so ist dieser Begriff dahingehend zu verstehen, daß die Unterseite jene Seite der Brammen ist, die wegen des Aufliegens auf den gekühlten Ofenschienen 5 die Schienenschatten trägt. Sollten Brammen, aus welchen Gründen auch immer, nach dem Verlassen des Ofens 3 bzw. 4 gewendet werden, müßten die Spulen 10 oben eine geringere und unten eine höhere Wicklungsdichte aufweisen.

Fig. 4 is eine weitere Ausbildung der Erfindung zu entnehmen, bei welcher der Spule 10 sowohl an ihrer Oberseite als auch an ihrer Unterseite je ein plattenförmiges Außenjoch 13 bzw. 14 aus magnetisch leitfähigem Material zugeordnet ist. Diese Joche, die gleichfalls in dem Rahmen 12 (Fig. 2) gehaltert sind, bringen eine Verminderung des Streufeldes, sodaß sich der Wirkungsgrad der Vorrichtung erhöht und die Gefahr der Erhitzung in der Nähe befindlicher Metallteile verringert wird. In der Praxis hat es sich meist als hinreichend erwiesen, bloß ein der Spulenunterseite zugeordnetes Außenjoch 14 zu verwenden.

In den Fig. 5 und 6 ist je an Hand eines Längsschnittes durch ein Brammenstück eine beispielsweise Temperaturverteilung vor und nach der Behandlung in einer Vorrichtung nach der Erfindung gezeigt. In Fig. 5 ist eine wassergekühlte Stoßschiene 5 angedeutet, auf welcher die Bramme 1 während ihres Durchganges durch einen Stoßofen 3 bzw. 4 abgestützt war. In Fig. 5 ist die Temperaturverteilung unmittelbar nach Verlassen des Stoßofens eingezeichnet, wobei man den fast bis zur Oberseite der Bramme 1 reichenden Temperatureinbruch (Schienenschatten) deutlich erkennt.

Nach der lokalen, induktiven Erwärmung in der erfindungsgemäßen Vorrichtung weist die Bramme 1 die in Fig. 6 eingezeichnete Temperaturverteilung auf, wobei mit i der Induktionsbereich einer Spule 10 bezeichnet ist, der sich spiegelbildlich nach links fortsetzt. (Gleiches gilt für die Temperaturverteilung in Fig. 5 und 6). Es ist zu sehen, daß nun der Schienenschatten sehr gut ausgeglichen ist, wodurch die Unregelmäßigkeiten, die ohne einen derartigen Ausgleich beim nachfolgenden Walzen auftreten würden, vermieden werden.

In den meisten Fällen ist es am zweckmäßigsten, eine der Anzahl der Schienenschatten pro Bramme entsprechende Anzahl von Induktionsspulen 10 zu verwenden, deren Abstände jenen der Schienenschatten entsprechen, da auf diese Weise je Bramme nur ein einziger Arbeitsgang erforderlich ist. Nimmt man eine geringere Durchsatzgeschwindigkeit der Brammen in Kauf, können jedoch auch weniger Induktionsspulen, im äußersten Fall eine einzige, vorgesehen sein.

Bei entsprechender Änderung des Spulenquerschnittes ist der Ausgleich von lokalen Temperatureinbrüchen auch an anderen Werkstücken als an Brammen mit flachem Rechteckquerschnitt möglich.

**Patentansprüche**

1. Vorrichtung zum Ausgleich der Schienenschatten an erhitzten Brammen in einer Anlage zum Erhitzen und Walzen von Brammen mit einem Ofen (3, 4) und einem Walzwerk (8), und mit zumindest einer im Weg der Brammen vor dem Walzwerk angeordneten, bei stillstehender Bramme im Bereich eines Schienenschattens liegender Induktionsspule (10), deren Windungen im wesentlichen senkrecht zur Längsrichtung der Brammen verlaufen und vorzugsweise als mit Flüssigkeit innengekühlte Kupferprofilrohre ausgebildet sind, dadurch gekennzeichnet, daß jede Induktionsspule (10) die Brammen (1) umfaßt, wobei der gegenseitige Abstand der einzelnen Spulenwindungen an der Brammenoberseite größer ist als an der Brammenunterseite.

2. Vorrichtung nach Anspruch 1, dadurch gekennzeichnet, daß jeder Induktionsspule (10) an ihrer Unterseite ein Außenjoch (14) zur Feldlinienkonzentration zugeordnet ist.

3. Vorrichtung nach Anspruch 1 oder 2, dadurch gekennzeichnet, daß jeder Induktionsspule (10) an ihrer Oberseite ein Außenjoch (13) zugeordnet ist.

4. Vorrichtung nach einem der Ansprüche 1 bis 3, dadurch gekennzeichnet, daß der Windungsabstand der Induktionsspule (10) an der Brammenoberseite annähernd doppelt so groß ist wie an der Brammenunterseite.

5. Vorrichtung nach einem der Ansprüche 1 bis 4, dadurch gekennzeichnet, daß jede Induktionsspule (10) entsprechend dem Brammenquerschnitt rechteckigen Querschnitt aufweist.

6. Vorrichtung nach einem der Ansprüche 1 bis 5, dadurch gekennzeichnet, daß jede Induktionsspule (10) – quer zur Bewegungsrichtung der Bramme gesehen – annähernd trapezförmig ist.

**Revendications**

1. Dispositif destiné à la copensation des ombres de glissières d'une brame portée à température élevée dans une installation du chauffage et de laminage de brames, comportant un four (3, 4) et un laminoir (8), et au moins une bobine d'induction (10) disposée sur le trajet des brames en amont du laminoir et située, lorsque la brame est à l'arrêt dans la zone d'une ombre de glissière, les enroulements de ladite bobine étant disposés de façon sensiblement perpendiculaire au sens longitudinal des brames et formés de préférence par des tubes profilés en cuivre refroidis intérieurement par un liquide, caractérisé en ce que chaque bobine d'induction (10) entoure les brames (1) l'écart mutuel entre les enroulements individuels de bobine étant plus important du côté supérieur que du côté inférieur des brames.

2. Dispositif selon la revendication 1 caractérisé en ce que chaque bobine d'induction (10) est munie à sa partie inférieure d'une carcasse extérieure (14) destinée à la concentration des lignes de champ.

3. Dispositif selon la revendication 1 ou 2 caractérisé en ce que chaque bobine d'induction (10) est munie à sa partie supérieure d'une carcasse extérieure (13).

4. Dispositif selon l'une des revendications 1 à 3 caractérisé en ce que l'écart des enroulements de la bobine d'induction (10) est approximativement deux fois plus grand du côté supérieur de la brame que du côté inférieur.

5. Dispositif selon l'une des revendications 1 à 4 caractérisé en ce que chaque bobine d'induction (10) présente une section transversale rectangulaire correspondant à la section transversale de la brame.

6. Dispositif selon l'une des revendications 1 à 5 caractérisé en ce que chaque bobine d'induction (10) – vue transversalement par rapport à la direction de déplacement de la brame – est approximativement en forme de trapèze.

**Claims**

1. A device for compensating for skid marks on heated slabs in a plant for heating and rolling slabs, with a furnace (3, 4) and a rolling mill (8) and with at least one induction coil (10) disposed upstream of the rolling mill and, when the slab is stationary, in the region of a skid mark, the windings of the induction coil extending substantially at right-angles to the longitudinal direction of the slabs, and preferably being constructed as profiled copper tubes filled on the inside with fluid, characterised in that each induction coil (10) engages around the slabs (1), the gap between the individual windings of the coil being greater on top of the slab than on the underside.

2. A device according to Claim 1, characterised in that an outer yoke (14) for field line concentration is associated with the underside of each induction coil (10).

3. A device according to Claim 1 or 2, characterised in that an outer yoke (13) is associated with the upper side of each induction coil (10).

4. A device according to one of Claims 1 to 3, characterised in that the distance between the windings of the induction coil (10) on the top of the slab is approximately twice as great as on the underside of the slab.

5. A device according to one of Claims 1 to 4, characterised in that each induction coil (10) is of rectangular cross-section, corresponding to the cross-section of a slab.

6. A device according to one of Claims 1 to 5, characterised in that, viewed crosswise to the direction of movement of the slab, each induction coil (10) is substantially trapezoidal.

Fig. 1

Fig. 2

w

e

A

e

1

10

*Fig. 3*

13

w

e

w

10

14

e

1

*Fig. 4*

Fig. 5

Fig. 6

EP 0 243 340 B1